# EUROPEAN PATENT APPLICATION

(11) **EP 4 589 755 A1**
(43) Date of publication of application: **23.07.2025**
(21) Application number: 24215906.9
(22) Date of filing: 27.11.2024
(51) Int. Cl.: H01M 50/533, H01M 50/536

(54) **SECONDARY BATTERY AND METHOD OF MANUFACTURING THE SAME**

(30) Priority: 04.12.2023 KR 20230173544; 14.02.2024 KR 20240021167
(71) Applicant: SK On Co., Ltd., Seoul 03161 (KR)
(72) Inventor: BYUN, Jae Gyu, 34124 Daejeon (KR); KWAK, Seung Ho, 34124 Daejeon (KR); SEO, Gi Jeong, 34124 Daejeon (KR); OH, Won Je, 34124 Daejeon (KR); JU, Seung Hoon, 34124 Daejeon (KR)
(74) Representative: Prüfer & Partner mbB Patentanwälte · Rechtsanwälte

(57) **Abstract**

A secondary battery includes an electrode assembly including an electrode tab, a current collector plate including at least one opening and contacting one surface of the electrode tab, and a welding portion formed along at least a portion of a boundary between the electrode tab and the current collector plate in contact with each other in the opening to bond a portion of the one surface of the electrode tab exposed through the opening to the current collector plate.

## Description

### TECHNICAL FIELD

The disclosure of this patent application relates to a secondary battery and a method of manufacturing the same.

### BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source.

The lithium secondary battery may include an electrode assembly including a cathode, an anode and a separation layer (separator), and an electrolyte immersing the electrode assembly. The lithium secondary battery may further include an outer material, e.g., in the form of a pouch, for housing the electrode assembly and the electrolyte.

For example, the electrode assembly may be manufactured in the form of a jelly roll by winding or folding the separator, or may be manufactured in the form of a stack by stacking the separator.

A current collector plate for transferring a current may be disposed between an uncoated portion (e.g., an electrode tab) of an electrode and a terminal. For example, the current collector plate may be bent and bonded to the uncoated portion, or a flat-shaped current collector plate may be bonded to a folded surface of the uncoated portion while the uncoated portion is in a folded state. A volume of the flat-shaped current collector plate may occupy a relatively small space compared to that when using the bent-shaped collector plate, and thus an energy density per unit volume of the secondary battery may be increased.

Recently, a welding structure for enhancing welding efficiency and reliability between the current collector plate and the uncoated portion.

### SUMMARY

According to an aspect of the present disclosure, there is provided a secondary battery having improved electrical property and reliability.

A secondary battery includes an electrode assembly including an electrode tab, a current collector plate including at least one opening and contacting one surface of the electrode tab, and a welding portion formed along at least a portion of a boundary between the electrode tab and the current collector plate in contact with each other in the opening to bond a portion of the one surface of the electrode tab exposed through the opening to the current collector plate.

In some embodiments, the opening may penetrate the one surface and the other surface of the current collector plate.

In some embodiments, the current collector plate may include a plurality of the openings arranged in an extending direction of the current collector plate.

In some embodiments, the welding portion may not penetrate the current collector plate.

In some embodiments, the welding portion may cover at least one lateral surface of the current collector plate exposed by the opening and is partially inserted into the electrode tab.

In some embodiments, the electrode tab may include a first junction protruding from the electrode assembly, a second junction extending in an opposite direction to that of the first junction, and a bent portion between the first junction and the second junction.

In some embodiments, the first junction and the second junction may face each other by the bent portion.

In some embodiments, one surface of the current collector plate may be in contact with the first junction, and the other surface of the current collector plate may be in contact with the second junction.

In some embodiments, the electrode assembly may include a plurality of repeatedly stacked electrodes and a separator interposed between the plurality of electrodes, and each of the plurality of electrodes may include an uncoated portion.

In some embodiments, the electrode tab may be formed by bending the uncoated portions protruding from one lateral portion of the electrode assembly in a single direction.

In some embodiments, the electrode assembly may include a plurality of cathodes each including a cathode uncoated portion and a plurality of anodes each including an anode uncoated portion. The cathode uncoated portion may protrude from one lateral portion of the electrode assembly, and the anode uncoated portion may protrude from the other lateral portion of the electrode assembly.

In some embodiments, the electrode tab may include a cathode tab formed by bending the cathode uncoated portions and an anode tab formed by bending the anode uncoated portions.

In some embodiments, the secondary battery may further include a case in which the electrode assembly is accommodated, a cap plate sealing the case, and an electrode terminal disposed on the cap plate to be electrically connected to the electrode tab.

In a method of manufacturing a secondary battery, a preliminary electrode assembly that includes uncoated portions protruding to an outside is prepared. The uncoated portions are bent in a single direction to form an electrode tab. A current collector plate including at least one opening is disposed on the electrode tab so that one surface of the current collector plate overlaps one surface of the electrode tab. The electrode tab and the current collector plate are welded through the opening along at least one side of the opening. An end portion of the electrode tab protruding to an outside of the current collector plate is bent to overlap the other surface of the current collector plate.

In some embodiments, in welding the electrode tab and the current collector plate, a laser is irradiated along a boundary between the electrode tab and the current collector plate exposed by the opening.

In some embodiments, the end portion of the electrode tab protruding to the outside of the current collector plate may be bent in a direction opposite to a bending direction of the uncoated portions.

In some embodiments, the electrode tab and the current collector plate may be welded by a fillet welding.

According to embodiments of the present disclosure, a secondary battery may include an electrode assembly including an electrode tab, and a current collector plate including at least one opening and connected to the electrode tab. The secondary battery may include a welding portion for bonding the current collector plate and the electrode tab through the opening. The welding portion may be formed along a portion of the electrode tab exposed through the opening and a lateral surface of the opening.

Accordingly, a welding structure may be formed even under low energy and low temperature conditions, and generation of foreign substances and cracks may be suppressed. Even when a thickness of the current collector plate is increased, a resistance of the secondary battery may be reduced while achieving high welding reliability. Additionally, improved capacity and electrical properties may be implemented while reducing a stress applied to the welding portion.

The lithium secondary battery of the present disclosure may be widely applied in green technology fields such as an electric vehicle, a battery charging station, a solar power generation, a wind power generation, etc., using a battery, etc. The secondary battery according to the present disclosure may be used for eco-friendly electric vehicles and hybrid vehicles to prevent a climate change by suppressing air pollution and greenhouse gas emissions. etc.

### BRIEF DESCRIPTION OF THE DRAWINGS

FIG. 1 is a schematic exploded perspective view of a secondary battery in accordance with example embodiments.
FIG. 2 is an exploded perspective view of an electrode assembly in accordance with example embodiments.
FIG. 3 and FIG. 4 are perspective views for describing a bonding process of a current collector plate and an electrode tab in accordance with example embodiments.
FIG. 5 is a cross-sectional view of a secondary battery taken along line a A-A' of FIG. 4.
FIG. 6 is a perspective view for describing a welding process of a current collecting plate and an electrode tab in accordance with example embodiments.
FIGS. 7 and 8 are cross-sectional views for describing a formation of a welding portion in accordance with example embodiments.
FIGS. 9 and 10 are cross-sectional views for describing a welding process according to a comparative example.
FIG. 11 is a perspective view illustrating a secondary battery in accordance with example embodiments.
FIG. 12 is a cross-sectional view of a secondary battery taken along a line C-C' of FIG. 11.

### DETAILED DESCRIPTION OF THE EMBODIMENTS

The terms "an upper surface", "a bottom surface", "an upper portion", "a lower portion", etc., herein are used relatively to distinguish different elements, positions, etc., and do not limit absolute positions.

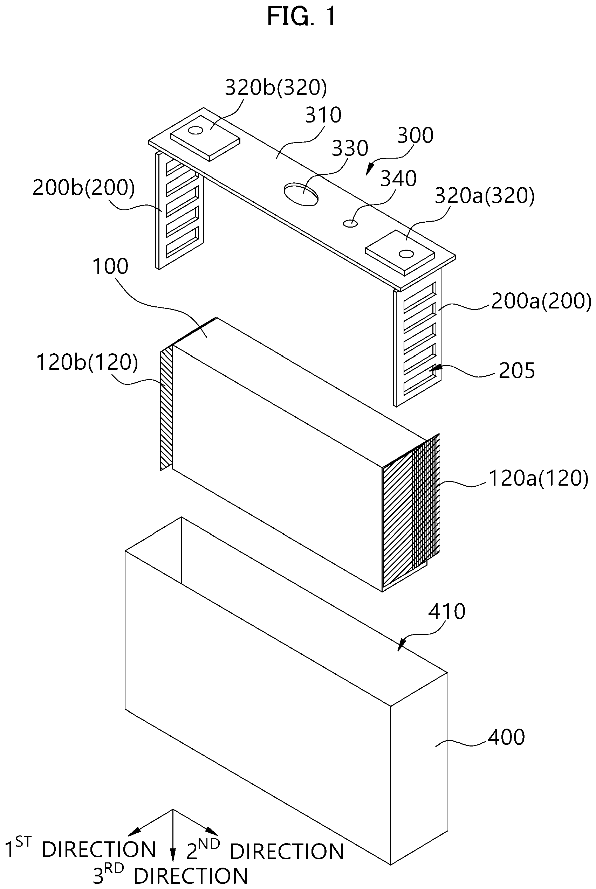

The term "first direction" as used herein may indicate a direction in which an electrode tab 120 is bent. The first direction may indicate a direction in which electrodes are staked in an electrode assembly 100. The first direction may indicate a width direction of the electrode assembly 100. The first direction may indicate a first direction in FIGS. 1 and 3 to 7.

The term "second direction" as used herein may indicate a length direction of the electrode assembly 100. The second direction may indicate a direction from one lateral portion to the other lateral portion of the electrode assembly 100.

The term "third direction" as used herein may indicate a height direction of the electrode assembly 100. The third direction may indicate a third direction in FIGS. 1 and 3 to 7. The third direction may indicate a direction perpendicular to the first direction and the second direction.

FIG. 1 is a schematic exploded perspective view of a secondary battery in accordance with example embodiments.

Referring to FIG. 1, a secondary battery includes the electrode assembly 100. The electrode assembly 100 includes an electrode tab 120. The electrode tab 120 may protrude from one lateral portion of the electrode assembly.

For example, the electrode assembly 100 may include repeatedly stacked electrodes. The electrode assembly 100 may further include a separator 105 interposed between a plurality of the electrodes.

Each of the plurality of the electrodes may include an uncoated portion. For example, the uncoated portion may protrude from the electrode assembly 100. The uncoated portions may be collected to form the electrode tab 120.

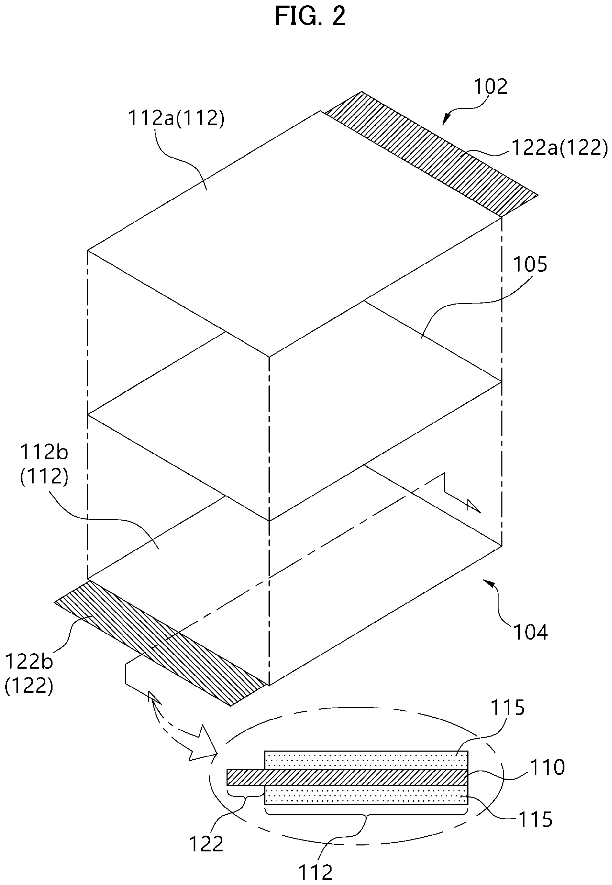

FIG. 2 is an exploded perspective view of an electrode assembly in accordance with example embodiments.

Referring to FIG. 2, the electrode assembly 100 may include a cathode 102, an anode 104 and the separator 105 interposed between the cathode 102 and the anode 104. The cathode 102, the separator 105 and the anode 104 may be sequentially stacked.

In example embodiments, the anode 102 and the cathode 104 may be alternately and repeatedly stacked with the separator 105 interposed therebetween to form the electrode assembly 100.

The cathode 102 and the anode 104 may each include a coating portion 112 and an uncoated portion 122.

The coating portion 112 may include a current collector 110 and an active material layer 115 disposed on at least one surface of the current collector 110. The uncoated portion 122 may be defined as a region of the current collector 110 on which the active material layer 115 is not formed. The uncoated portion 122 may extend from the current collector 110 of the coating portion 112 and protrude from the coating portion 112.

In some embodiments, the active material layer may be formed on each of both surfaces of the current collector.

The coating portion 112 may include a cathode coating portion 112a and an anode coating portion 112b. The cathode coating portion 112a and the anode coating portion 112b may overlap each other in the vertical direction. As used herein, the term "vertical direction" may refer to a direction in which electrodes are stacked or the first direction. The separator 105 may be interposed between the cathode coating portion 112a and the anode coating portion 112b.

The uncoated portion 122 may include a cathode uncoated portion 122a and an anode uncoated portion 122b. In example embodiments, the cathode uncoated portion 122a and the anode uncoated portion 122b may protrude in opposite directions to each other. For example, the cathode uncoated portion 122a may protrude in one direction from the cathode coating portion 112a, and the anode uncoated portion 122b may protrude in a direction opposite to the one direction from the anode coating portion 112b.

The cathode 102 may include a cathode current collector and a cathode active material layer.

The cathode active material layer may include a cathode active material. The cathode active material may include a compound capable of reversibly intercalating and de-intercalating lithium ions.

In example embodiments, the cathode active material may include lithium metal oxide particles. For example, the lithium metal oxide particles may include nickel (Ni), and may further include at least one of cobalt (Co), manganese (Mn), and aluminum (Al).

In some embodiments, the lithium metal oxide particle may include a lithium-nickel-cobalt-manganese (LNCM) oxide, a lithium-nickel-manganese (LNM) oxide, a lithium-nickel-aluminum (LNA) oxide, or the like.

For example, the cathode current collector may include stainless steel, nickel, aluminum, titanium, copper, zinc or an alloy thereof. In an embodiment, the cathode current collector may include aluminum or an aluminum alloy.

For example, a slurry may be prepared by mixing and stirring the cathode active material with a binder, a conductive material, and/or a dispersant in a solvent. The slurry may be coated on the cathode current collector, dried and pressed to prepare the cathode 102 including the cathode active material layer.

The binder may include, e.g., an organic binder such as vinylidene fluoride-hexafluoropropylene copolymer (PVDF-co-HFP), polyvinylidene fluoride (PVDF), polyacrylonitrile and polymethylmethacrylate; or an aqueous binder such as styrene-butadiene rubber (SBR), and the binder may be used together with a thickener such as carboxymethyl cellulose (CMC). For example, a PVDF-based binder may be used as a cathode binder.

The conductive material may be included to promote an electron transfer between active material particles. For example, the conductive material may include a carbon-based conductive material such as graphite, carbon black, graphene and a carbon nanotube and/or a metal-based conductive material including, e.g., such as tin, tin oxide, titanium oxide, a perovskite-based material such as LaSrCoO₃, LaSrMnO₃, etc.

The anode 104 may include an anode current collector and an anode active material layer.

The anode active material layer may include an anode active material. The anode active material may include, e.g., a carbon-based material such as a crystalline carbon, an amorphous carbon, a carbon composite and a carbon fiber; a lithium alloy; a silicon (Si)-based active material.

Examples of the amorphous carbon include hard carbon, coke, mesocarbon microbead (MCMB), mesophase pitch-based carbon fiber (MPCF), and the like. Examples of the crystalline carbon include a graphite-based carbon such as natural graphite, artificial graphite, a graphitized coke, a graphitized MCMB, a graphitized MPCF, and the like. Examples of an element included in the lithium alloy include aluminum, zinc, bismuth, cadmium, antimony, silicon, lead, tin, gallium, indium, and the like.

The anode current collector may include stainless steel, copper, nickel, aluminum, titanium, or an alloy thereof. In an embodiment, the anode current collector may include copper or a copper alloy.

For example, the anode active material may be mixed and stirred together with the binder, the conductive material, the thickener, and the like in a solvent to from the slurry. The slurry may be coated on at least one surface of the anode current collector, dried and pressed to prepare the anode 104 including the anode active material layer.

Materials substantially the same as or similar to the above-described materials used in the cathode active material layer may be used as the binder and the conductive material. In some embodiments, the binder for forming the anode may include an aqueous binder such as styrene-butadiene rubber (SBR) for a compatibility with the carbon-based active material, and may be used together with the thickener such as carboxymethyl cellulose (CMC).

The separator 105 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, and the like. The separator 105 may include a nonwoven fabric formed of a glass fiber having a high melting point, a polyethylene terephthalate fiber, or the like.

Referring back to FIG. 1, the electrode tab 120 may include a cathode tab 120a protruding from the cathode and an anode tab 120b protruding from the anode.

For example, the cathode uncoated portions may be assembled to form the cathode tab 120a, and the anode uncoated portions may be assembled to form the anode tab 120b.

The cathode tab 120a and the anode tab 120b may protrude from each of both lateral portions of the electrode assembly 100. For example, the cathode tab 120a may protrude from one surface of the electrode assembly 100 in the second direction, and the anode tab 120b may protrude from the other surface of the electrode assembly 100 in the second direction.

The secondary battery may include a case 400 accommodating the electrode assembly 100. The case 400 may form an outer surface of the secondary battery. In an embodiment, the case 400 may include a metal. Accordingly, the case 400 may maintain rigidity and may buffer an impact on the electrode assembly 100.

The case 400 may include an accommodation portion 410 in which the electrode assembly 100 is accommodated. For example, an opening may be formed in an upper surface of the case 400 so that the case 400 may be opened in the third direction. The electrode assembly 100 may be accommodated in the accommodation portion 410 through the opening.

The secondary battery may include a cap plate 300. The cap plate 300 may be assembled with the case 400. For example, the cap plate 300 may be assembled with the opening of the case 400 to seal the accommodation portion 410.

The cap plate 300 may include a cover 310. The cover 310 may have a plate shape. The cap plate 300 may be coupled or connected to the case 400 by the cover 310.

The cap plate 300 may include an injection hole 340. The injection hole 340 may be a hole or an opening formed through the cover 310. An electrolyte solution may be injected into the case 400 through the injection hole 340.

The cap plate 300 may further include a vent hole 330. The vent hole 330 may be formed to penetrate the cover 310. A inner space of the case 400 may communicate with an outside through the vent hole 330.

A vent plate may be coupled to the vent hole 330. The vent plate may be ruptured when an internal pressure of the case 400 is greater than or equal to a set pressure. Accordingly, a gas at an inside of the case 400 may be discharged to the outside of the case 400, and the internal pressure of the case 400 may be reduced.

The cap plate 300 may include an electrode terminal 320. The electrode terminal 320 may be coupled to the cover 310. For example, the cover 310 may include an opening to which the electrode terminal 320 may be coupled. The opening may pass through the cover 310. The electrode terminal 320 may be connected to the electrode assembly 100 through the opening.

The electrode terminal 320 may include a cathode terminal 320a and an anode terminal 320b. The cathode terminal 320a may be electrically connected to the cathode tab 120a. The anode terminal 320b may be electrically connected to the anode tab 120b.

The secondary battery includes a current collector plate 200. The current collector plate 200 may have a plate shape. Accordingly, a volume occupied by the current collector plate 200 may be reduced, and a space of the electrode assembly 100 may be increased to increase a capacity and an energy density. Additionally, a contact area between the current collector plate 200 and the electrode assembly 100 may be increased to reduce an internal resistance of the secondary battery.

The current collector plate 200 is bonded to the electrode tab 120. The current collector plate 200 may be assembled with or attached to the cap plate 300 to be connected to the electrode terminal 320. The electrode terminal 320 and the electrode tab 120 may be electrically connected to each other by the current collector plate 200.

The current collector plate 200 may include a cathode current collector plate 200a and an anode current collector plate 200b. The cathode current collector plate 200a may be connected to the cathode tab 120a and the cathode terminal 320a, and the anode current collecting plate 200b may be connected to the anode tab 120b and the anode terminal 320b.

The current collector plate 200 includes at least one opening 205. The opening 205 may be formed to penetrate one surface and the other surface of the current collector plate 200. The current collector plate 200 and the electrode tab 120 may be bonded through the opening 205.

In example embodiments, a plurality of openings 205 may be formed in the current collector plate 200 along the third direction.

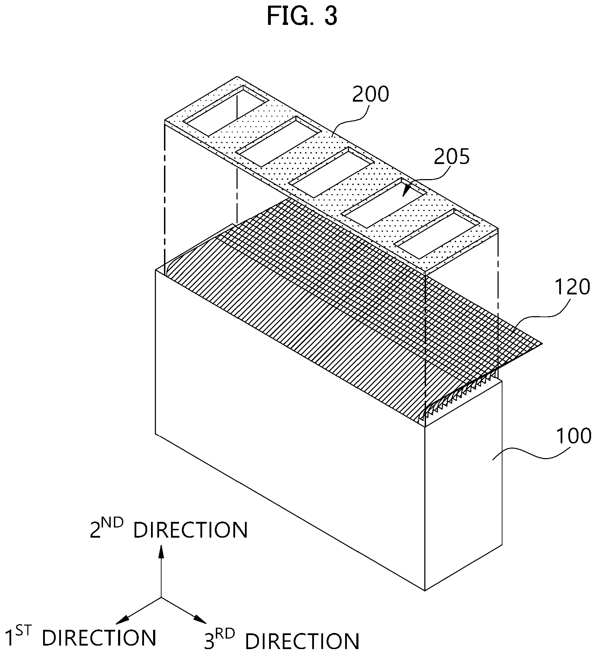

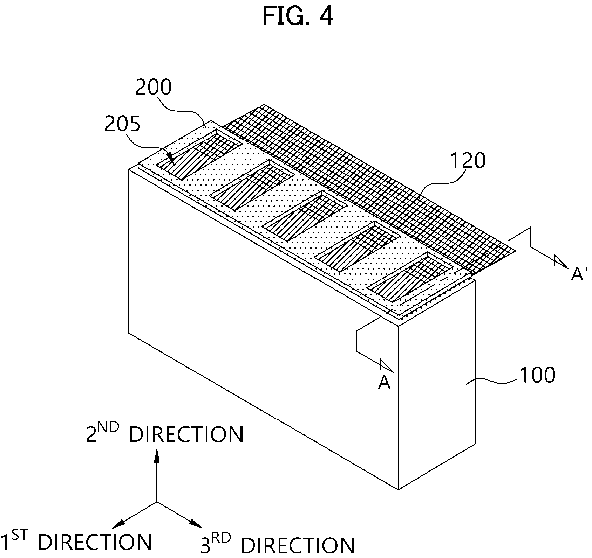

FIG. 3 and FIG. 4 are perspective views for describing a bonding process of a current collector plate and an electrode tab in accordance with example embodiments. For example, FIG. 3 is a perspective view illustrating a state before the current collector plate is located on the electrode tab, and FIG. 4 is a perspective view illustrating a state in which the current collector plate is located on the electrode tab.

Referring to FIGS. 3 and 4, the current collector plate 200 may be superimposed on the electrode tab 120. For example, the current collector plate 200 may be disposed to overlap one surface of the electrode tab 120 formed by folding the uncoated portions.

At least a portion of the electrode tab 120 may protrude to an outside of the electrode assembly 100. The electrode tab 120 may partially overlap the current collector plate 200. For example, a portion of the electrode tab 120 overlapping the electrode assembly 100 in the second direction may overlap the current collector plate 200 in the second direction.

The current collector plate 200 may be electrically connected to the electrode tab 120 and may be in a physical contact with the electrode tab 120. As described above, the current collector plate 200 includes a plurality of openings 205, and the electrode tab 120 may be partially exposed through the openings 205.

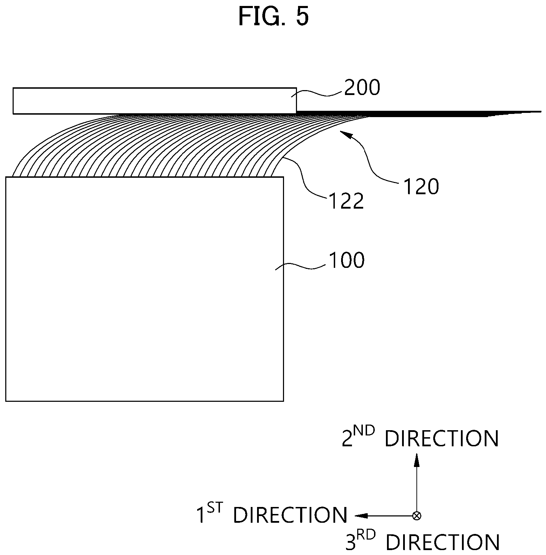

FIG. 5 is a cross-sectional view of a secondary battery taken along line a A-A' of FIG. 4. For example, FIG. 5 is a cross-sectional view of the secondary battery taken along a line A-A' of FIG. 4 and observed in the third direction.

Referring to FIG. 5, the uncoated portions 122 may protrude from one lateral portion of the electrode assembly 100 in the second direction to be aligned. The uncoated portions 122 protruding from the one lateral portion may be bent together in a single direction. The bent uncoated portions 122 may be assembled to define the electrode tab 120.

The uncoated portions 122 may be laid together in the single direction, so that a bent surface of the electrode tab 120 perpendicular to a direction perpendicular to the bent direction, for example, perpendicular to the second direction in FIG. 5 may be formed. The current collector plate 200 may be disposed such that one surface of the current collector plate 200 contacts the bent surface of the electrode tab 120.

Although FIG. 5 illustrates that the uncoated portions 122 are not completely laid down, the uncoated portions 122 may be pressed by the current collector plate 200 to be completely laid down in the bent direction. Accordingly, the current collector plate 200 may be closer to the electrode assembly 100.

In some embodiments, the electrode tab 120 may be formed by entirely folding the uncoated portions 122 without notching of the uncoated portion 122 (e.g., see FIG. 2). The electrode assembly may be assembled only by reel-cutting and stacking processes without a notching process for the uncoated portion. Accordingly, a manufacturing process of the secondary battery may be simplified.

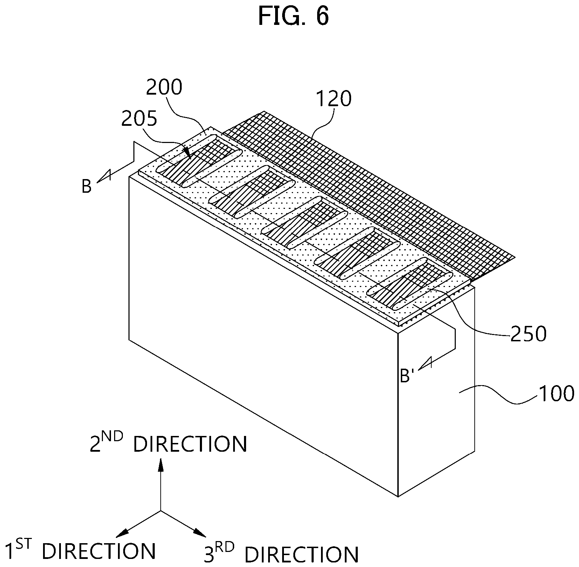

FIG. 6 is a perspective view for describing a welding process of a current collecting plate and an electrode tab in accordance with example embodiments.

Referring to FIG. 6, the electrode tab 120 may be welded to the current collector plate 200 through the opening 205 of the current collector plate 200.

In some embodiments, an ultrasonic welding or a laser welding may be performed along a boundary between the current collector plate 200 and the electrode tab 120 through the opening 205. The current collector plate 200 and the electrode tab 120 may be bonded to each other by the welding.

The secondary battery includes a welding portion 250 for bonding a portion of the electrode tab 120 exposed through the opening 205 and one lateral side of the current collector plate 200 exposed by the opening 205.

The welding portion 250 may be formed along at least one side of the opening 205. In an embodiment, the welding portion 250 may be formed along both sides opposite to each other of the opening 205.

For example, the welding portion 250 may have a substantially rectangular shape. In an embodiment, the welding portion 250 may be formed along both opposite long sides of the opening 205. For example, the long sides may face each other in the third direction. Accordingly, connection reliability of the electrode tab 120 and the current collector plate 200 may be further improved.

In an embodiment, the welding portion 250 may be formed along all sides of the opening 205. For example, the welding portion 250 may be formed along opposite short sides and opposite long sides of the opening 250.

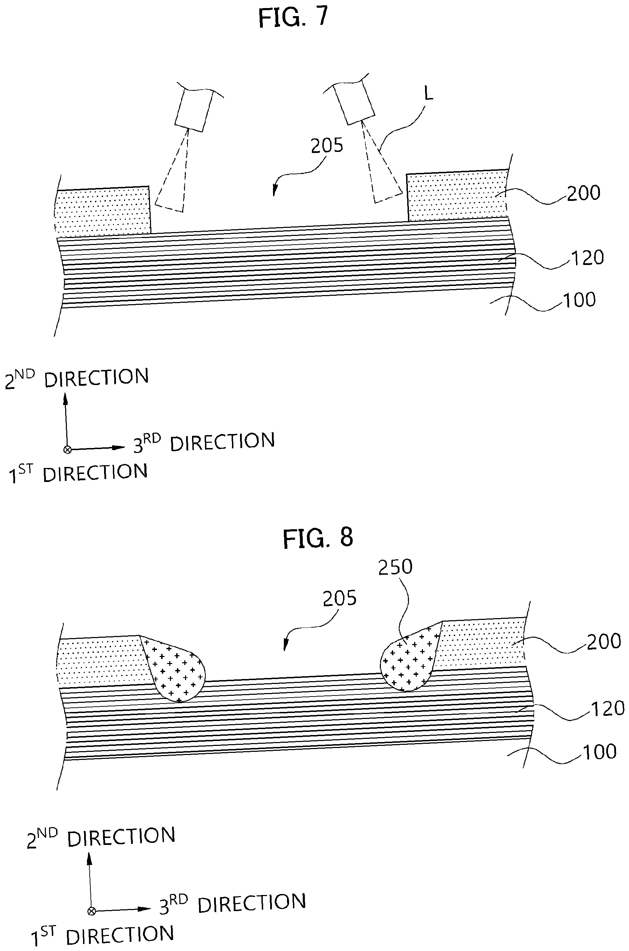

FIGS. 7 and 8 are cross-sectional views for describing a formation of a welding portion in accordance with example embodiments. For example, FIGS. 7 and 8 are cross-sectional views of the secondary battery taken along a line B-B' of FIG. 6 and observed in the first direction.

Referring to FIG. 7, a heater such as a laser L may be irradiated to a boundary between one surface of the electrode tab 120 exposed through the opening 205 and a lateral surface of the current collector plate exposed by the opening 205. The heater may be irradiated along one side of the opening 205.

In some embodiments, the current collector plate 200 and the electrode tab 120 may be directly melted and bonded through, e.g., a laser at a point where the current collector plate 200 and the electrode tab 120 meet each other.

In some embodiments, a bonding material may be inserted into the opening 205. For example, the bonding material is inserted along an exposed boundary of the electrode tab 120 and the current collector plate 200, and the bonding material may be melted by the heater such as the laser so that the welding portion 250 may be formed.

Referring to FIG. 8, the welding portion 250 may be formed at a lateral side of the opening 205 and the one surface of the electrode tab 120. The welding portion 250 may cover the lateral surface of the current collector plate 200 exposed by the opening 205 and may be partially inserted into the electrode tab 120.

The welding portion 250 may be formed only at an edge of the opening 205. For example, at least a portion of the electrode tab 120 may be exposed by the opening 205 even after the welding portion 250 is formed.

For example, the welding portion 250 may be formed by a fillet welding. As the welding portion 250 is formed by fillet welding, the electrode tab 120 and the current collector plate 200 may be welded and connected to each other without the welding portion 250 penetrating the current collector plate 200.

The welding portion 250 may be formed by the fillet welding, so that the welding process may be performed even at a low energy and a low temperature, and foreign substances generated by the welding process may be prevented from flowing into the electrode assembly 100.

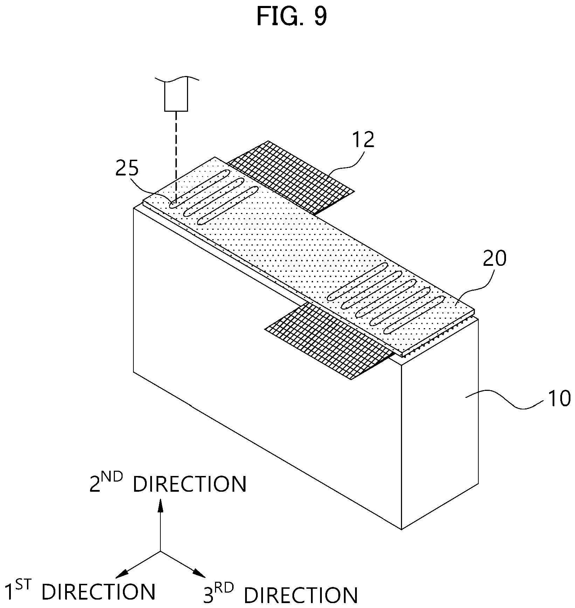

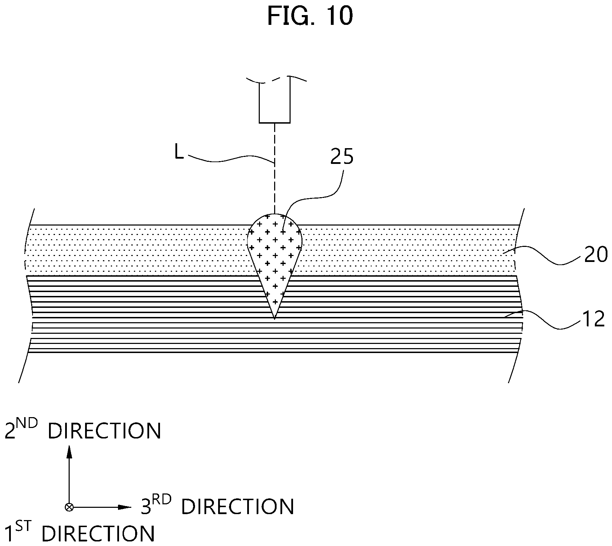

FIGS. 9 and 10 are cross-sectional views for describing a welding process according to a comparative example. FIG. 10 is a cross-sectional view of the welding portion of FIG. 9 observed in the first direction.

Referring to FIG. 9, an electrode tab 12 may protrude from one side of an electrode assembly 10. A current collector plate 20 may be disposed on the electrode tab 12. The current collector plate 20 may have a plate shape which does not have an opening or a through hole.

A laser L may be irradiated onto an upper surface of the current collector plate 20 in a state in which the current collector plate 20 and the electrode tab 12 overlap each other. For example, the laser L may contact the current collector plate 20, an then may penetrate through the current collector plate 20 to contact the electrode tab 12 under the current collector plate 20.

For example, the current collector plate 20 and the electrode tab 12 may be welded by a lap joint welding. Accordingly, the welding portion 25 connecting the current collector plate 20 and the electrode tab 12 may be formed.

Referring to FIG. 10, a welding portion 25 may penetrate the current collector plate 20 to bond the electrode tab 12 under the current collector plate 20 to the current collector plate 20. In this case, as the welding portion 25 is formed to penetrate the current collector plate 20, a thickness of the current collector plate 20 should be decreased and a resistance of the current collector plate 20 is increased.

Further, as the laser L for the welding faces the electrode assembly 10, foreign substances such as a spatter, a dust, a fume, etc., generated during the welding process may enter the electrode assembly 10.

According to embodiments of the present invention, the welding portion 250 may be formed by the fillet welding through the opening 205, so that the welding portion 250 may be formed at a relatively low energy and a low temperature. Accordingly, the foreign substances such as the spatter and the fume may be reduced. Additionally, a thickness of the current collector plate 200 may be increased, so that a resistance may be reduced and a degree of freedom in a design and a process of the secondary battery may be improved.

In some embodiments, the welding portion 250 may be at least partially exposed to an outside of the opening 205 through the opening 205. For example, the welding portion 250 may be partially formed along the edge of the opening 205. The welding portion 250 may not be limited to a base material such as the current collector plate 200 and the electrode tab 120, etc., so that a stress generation due to a metal solidification may be reduced, and a crack sensitivity of the welding portion 250 may be reduced.

For example, in the comparative example of FIG. 10, as the base material surrounds the welding portion 25, the stress generated from the base material due to the metal solidification may increase. In this case, cracks may occur due to a high stress applied to the welding portion 25.

Additionally, according to embodiments of the present disclosure, the welding portion 250 may be checked from the outside after the welding process of the current collecting plate 200 and the electrode tab 120. Accordingly, welding quality and foreign substance management may be easily performed.

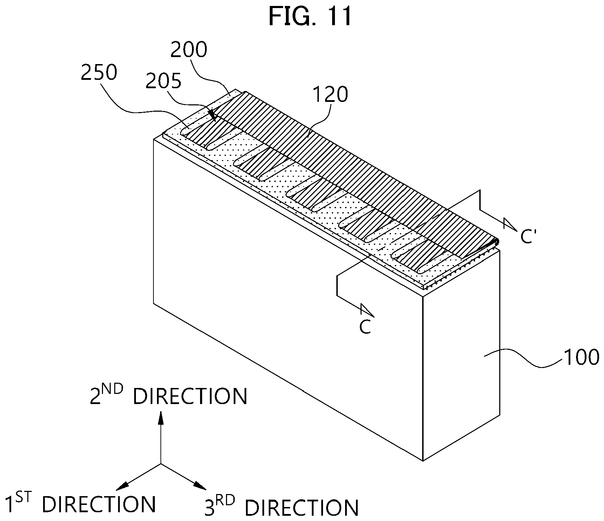

FIG. 11 is a perspective view illustrating a secondary battery in accordance with example embodiments.

Referring to FIG. 11, an end portion of the electrode tab 120 protruding to an outside of the current collector plate 200 may be folded, and the end portion of the electrode tab 120 may be located on the current collector plate 200.

The end portion of the electrode tab 120 may be bent in a direction opposite to the bent direction of the uncoated portions 122.

The end portion of the electrode tab 120 may be bonded to the current collector plate 200. For example, the end portion of the electrode tab 120 and the current collector plate 200 may be welded and fixed.

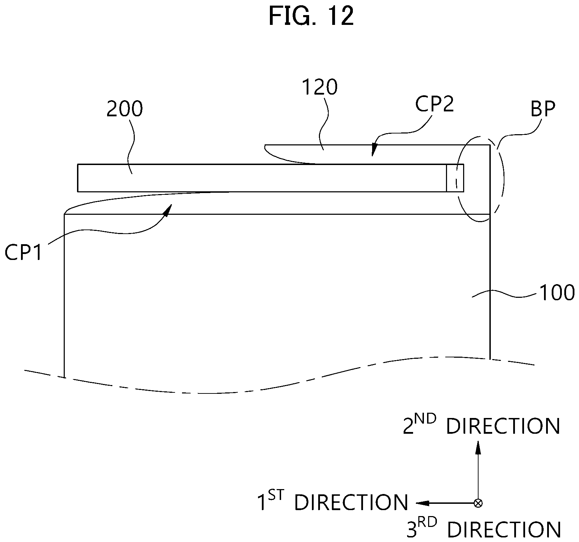

FIG. 12 is a cross-sectional view of a secondary battery taken along a line C-C' of FIG. 11. For example, FIG. 12 is a cross-sectional view of the secondary battery taken along the line C-C' of FIG. 11 and observed in the third direction.

Referring to FIG. 12, the electrode tab 120 may include a first junction CP1, a bent portion BP, and a second junction CP2. The first junction CP1 and the second junction CP2 may be connected to each other by the bent portion BP.

The first junction CP1 and the second junction CP2 may extend in opposite directions to each other. The first junction CP1 and the second junction CP2 may face each other by the bent portion BP.

The current collector plate 200 may be interposed between the first junction CP1 and the second junction CP2. For example, the first junction CP1 may be in contact with a lower surface of the current collector plate 200, and the second junction CP2 may be in contact with an upper surface of the current collector plate 200. Accordingly, a contact area between the current collector plate 200 and the electrode tab 120 may be increased, and an internal resistance of the secondary battery may be decreased.

In an embodiment, the second junction CP2 and the current collector plate 200 may be fillet-welded through the opening 205. For example, a welding portion may be formed along one surface of the second junction CP2 facing the current collector plate 200 and a lateral surface of the current collector plate 200 exposed by the opening 205.

In an embodiment, an area of the opening 205 in a plan view observed in the second direction may be 40% or less of a total area of the current collector plate 200. Accordingly, an increase in resistance due to the opening 205 may be suppressed.

In an embodiment, the area of the opening 205 may be 5% or more of the total area of the current collector plate 200 in a plan view observed in the second direction. Accordingly, a space in which the current collector plate 200 and the electrode tab 120 may be fillet-welded may be sufficiently achieved.

In some embodiments, the welding portion 250 may be formed to have an area of 1% to 10% of a total area of the opening 205 in the plan view observed in the second direction. Within the above range, an increase in resistance due to the welding portion 250 and generation of foreign substances may be suppressed while enhancing welding efficiency and reliability.

In some embodiments, the opening 205 may have a circular shape, or a polygonal shape such as a triangle, a square, a pentagon, a hexagon, or the like.

In some embodiments, the electrolyte solution may be accommodated in the case 400 to impregnate the electrode assembly 100. For example, a non-aqueous electrolyte solution may be used as the electrolyte solution.

The non-aqueous electrolyte solution may include a lithium salt and an organic solvent. The lithium salt may be represented by, e.g., Li⁺X⁻. The anion X⁻ of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃; CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or the like. These may be used alone or in a combination of two or more therefrom.

Non-limiting examples of the organic solvent may include propylene carbonate (PC), ethylene carbonate (EC), diethyl carbonate (DEC), dimethyl carbonate (DMC), ethylmethyl carbonate (EMC), methylpropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

The shape of the case 400 in FIG. 1 is merely provided as an example, and may be appropriately changed according to a shape and a height of the electrode assembly 100, and a structure of a module or pack to which the secondary battery is applied.

## Claims

1. A secondary battery, comprising:
an electrode assembly (100) comprising an electrode tab (120);
a current collector plate (200) comprising at least one opening (205) and contacting one surface of the electrode tab (120); and
a welding portion (250) formed along at least a portion of a boundary between the electrode tab (120) and the current collector plate (200) in contact with each other in the opening (205) to bond a portion of the one surface of the electrode tab (120) exposed through the opening (205) to the current collector plate (200).

2. The secondary battery according to claim 1, wherein the opening (205) penetrates the one surface and the other surface of the current collector plate (200).

3. The secondary battery according to any one of claims 1 and 2, wherein the current collector plate (200) comprises a plurality of the openings (205) arranged in an extending direction of the current collector plate (200).

4. The secondary battery according to any one of claims 1 to 3, wherein the welding portion (250) does not penetrate the current collector plate (200).

5. The secondary battery according to any one of claims 1 to 4, wherein the welding portion (250) covers at least one lateral surface of the current collector plate (200) exposed by the opening (205) and is partially inserted into the electrode tab (120).

6. The secondary battery according to any one of claims 1 to 5, wherein the electrode tab (120) comprises:
a first junction (CP1) protruding from the electrode assembly (100) ;
a second junction (CP2) extending in an opposite direction to that of the first junction (CP1); and
a bent portion (BP) between the first junction (CP1) and the second junction (CP2).

7. The secondary battery according to claim 6, wherein the first junction (CP1) and the second junction (CP2) face each other by the bent portion (BP).

8. The secondary battery according to any one of claims 1 to 7, wherein the electrode assembly (100) comprises a plurality of repeatedly stacked electrodes (102, 104) and a separator (105) interposed between the plurality of electrodes (102, 104), and
each of the plurality of electrodes (102, 104) comprises an uncoated portion (122).

9. The secondary battery according to claim 8, wherein the electrode tab (120) is formed by bending the uncoated portions (122) protruding from one lateral portion of the electrode assembly (100) in a single direction.

10. The secondary battery according to claim 8, wherein the electrode assembly (100) comprises a plurality of cathodes (102) each including a cathode uncoated portion (122a) and a plurality of anodes (104) each including an anode uncoated portion (122b), and
the cathode uncoated portion (122a) protrudes from one lateral portion of the electrode assembly (100), and the anode uncoated portion (122b) protrudes from the other lateral portion of the electrode assembly (100).

11. The secondary battery according to claim 10, wherein the electrode tab (120) comprises a cathode tab (120a) formed by bending the cathode uncoated portions (122a) and an anode tab (120b) formed by bending the anode uncoated portions (122b).

12. The secondary battery according to any one of claims 1 to 11, further comprising:
a case (400) in which the electrode assembly (100) is accommodated;
a cap plate (300) sealing the case (400); and
an electrode terminal (320) disposed on the cap plate (300) to be electrically connected to the electrode tab (120).

13. A method of manufacturing a secondary battery, comprising:
preparing a preliminary electrode assembly that includes uncoated portions (122) protruding to an outside;
bending the uncoated portions (122) in a single direction to form an electrode tab (120) ;
disposing a current collector plate (200) including at least one opening (205) on the electrode tab (120) so that one surface of the current collector plate (200) overlaps one surface of the electrode tab (120);
welding the electrode tab (120) and the current collector plate (200) through the opening (205) along at least one side of the opening (205); and
bending an end portion of the electrode tab (120) protruding to an outside of the current collector plate (200) to overlap the other surface of the current collector plate (200).

14. The method of claim 13, wherein welding the electrode tab (120) and the current collector plate (200) comprises irradiating a laser along a boundary between the electrode tab (120) and the current collector plate (200) exposed by the opening (205).

15. The method of any one of claims 13 and 14, wherein welding the electrode tab (120) and the current collector plate (200) comprises a fillet welding.
